# EUROPEAN PATENT SPECIFICATION

(11) **EP 3 282 902 B1**
(45) Date of publication and mention of the grant of the patent: **14.02.2024**
(21) Application number: 16719618.7
(22) Date of filing: 12.04.2016
(51) Int. Cl.: A47J 31/06

(54) **METHOD FOR PUNCTURING A BEVERAGE CAPSULE PRIOR TO ITS INSERTION INTO A BREWING MACHINE**
VERFAHREN ZUM PERFORIEREN EINER GETRÄNKEKAPSEL VOR DEM EINFÜGEN IN EINE BRÜHMASCHINE
PROCEDE DE PERFORATION D'UNE CAPSULE DE BOISSON AVANT SON INSERTION DANS UNE MACHINE À BOISSONS

(30) Priority: 13.04.2015 US 201562146634 P
(43) Date of publication of application: 21.02.2018
(73) Proprietor: The Richards Corporation, Sterling, VA 20166 (US)
(72) Inventor: MINNIER, Thomas James, Sterling, Virginia 20166 (US); SALATINO, John Anthony, Sterling, Virginia 20166 (US)
(74) Representative: Gevers & Orès
(86) International application number: PCT/US2016/027120
(87) International publication number: WO 2016/168190

(56) References cited:
- WO-A1-2013/153526
- CN-U- 201 469 004
- DE-U1-202006 018 880
- FR-A1- 2 914 547
- US-A- 2 676 631
- US-A- 3 320 987
- US-A- 3 331 415
- US-A1- 2013 263 423

## Description

### CROSS REFERENCE TO RELATED APPLICATIONS

This application claims the benefit of U.S. Provisional Application Serial No. 62/146,634, filed April 13, 2015, titled "Capsule Opener Device".

### FIELD OF THE DISCLOSURE

Embodiments of the present disclosure relate generally to capsule opener devices that are used to puncture coffee and/or espresso capsules for use in brewing machines.

### BACKGROUND

Espresso makers typically force very hot water through tightly packed espresso/coffee powder or grounds. These makers may also be used to make tea, hot cocoa, and many other warmed beverages. Many espresso and coffee drink makers, such as for commercial use, high-end home use, and for use on-board aircraft (or other passenger transport vehicles), are attached directly to the water plumbing of the site or vehicle. This allows the machine to pull as much water as needed from external water tanks so that it is able to brew without being manually refilled. Other designs have built-in water reservoirs that are to be periodically refilled. Other designs require water fill per use.

One feature common to most espresso and coffee drink makers is that they are designed to accept one particular form of powder/coffee/tea ground container. For example, some machines are designed for particular use with certain brands or styles of capsules or pods, or only for use with loose coffee grounds. These machines have internal features that are specifically shaped to puncture and hold the particular brand or style of capsule, pod, or loose grounds in order to force water therethough and to create the desired espresso or other coffee beverage. For example, a certain brand X machine may be designed for use only with brand X capsules or cups. This can limit the end user or consumer to purchasing only the coffee pods, capsules, or cups that work with the particular purchased machine.

For example, if an airline wishes to offer espresso, cappuccino, tea, or hot cocoa on-board its aircraft, the airline typically selects the form it desires (e.g., a particular brand of pods or capsules or easy serving espresso pods), and then installs the appropriate machines on its aircraft(s). However, when these machines are purchased in bulk to be installed on a fleet of aircraft, for example, being limited to one form of grounds capsule or pod can be disadvantageous in a number of instances. For example, an aircraft owner/operator may not wish to be obligated to a sole source supplier for the life of the aircraft (or fleet of aircraft) that has been fitted with a particular machine brand. The present assignee has addressed this issue with its universal espresso maker, described by U.S. Patent No. 9,101,234.

In some instances, it may be necessary to prepare (e.g., puncture, open, unpackage, etc.) pre-packaged brewing units (e.g., a capsule or other coffee/espresso grounds holder) prior to use in this or other brewing machines. Puncturing the capsule should be done in a safe manner, while also being efficient and easy for the user. The present inventors have sought to solve this problem with the opener devices described herein. Document WO 2013 153526 A1 discloses a method according to the preamble of claim 1.

### BRIEF SUMMARY

Embodiments of the invention described herein thus provide a method for puncturing a capsule prior to its insertion in an espresso machine or coffee/tea brewing machine. There is generally provided an opener device having a puncture feature positioned to be pressed against a capsule. In one example, the puncture feature may be positioned within a well. In another example, the puncture feature may be positioned with respect to a movable housing that presses down against the capsule. Another example, there may be provided a first surface for receiving or supporting the capsule and a second surface comprising an opener feature for puncturing one or more openings in the capsule. The opener device is located separately from the brewing machine. Once the one or more openings have been formed, the capsule may then be inserted into the brewing machine for use.

### BRIEF DESCRIPTION OF THE DRAWINGS

FIG. 1 shows a front perspective view of one embodiment of an opener device, with the lid in an open position.
FIG. 2 shows a side cross-sectional view of the opener device of FIG. 1, with the lid in its closed position.
FIG. 3 shows a top perspective view of the opener device of FIG. 1.
FIG. 4 shows a side plan view of the opener device of FIG. 1, with the lid in its open position.
FIG. 5 shows a side plan view of the opener device of FIG. 1, with the lid in its closed position.
FIG. 6 shows a side perspective view of the opener device of FIG. 1, with a capsule positioned in the well.
FIG. 7 shows a side perspective view of an alternate embodiment of an opener device.
FIG. 8 shows a side cross-sectional view of the opener device of FIG. 7.
FIG. 9 shows a front plan view of the opener device of FIG. 7.
FIG. 10 shows a side perspective view of the opener device of FIG. 7, with a capsule positioned in the capsule containment (lower) portion.
FIG. 11 shows an exploded perspective view of the opener device of FIG. 7.
FIG. 12 shows a side perspective view of an alternate embodiment of the opener device of FIG. 7, with a capsule in position.
FIG. 13 shows a side perspective view of an alternate capsule opener device with a capsule in the process of being inserted therein.
FIG. 14 shows a side perspective view of the opener device of FIG. 13 with a capsule in position.
FIG. 15 shows a side perspective view of an alternate opener device.
FIG. 16 shows a side cross-sectional view of the opener device of FIG. 15.
FIG. 17 shows a side perspective view of the opener device of FIG. 15, with a capsule in position.
FIG. 18 shows a side perspective view of an alternate opener device.
FIG. 19 shows a side cross-sectional view of the opener device of FIG. 18.
FIG. 20 shows a side perspective view of the opener device of FIG. 18, with a capsule in the process of being inserted therein.
FIG. 21 shows a schematic view of various embodiments of opener devices with hinged lids.

### DETAILED DESCRIPTION

Coffee and/or espresso brewing machines have found recent popularity. Many of these brewing machines have built-in openers. When a capsule is inserted in a cavity of the brewing machine, actions, that may include, but are not limited to, lowering a handle or actuated leverage, both simultaneously secures the capsule and causes puncturing of the capsule to allow water flow into the capsule. There are also provided commercially available pre-punctured capsules that are individually bagged, eliminating the need for the brewing machine to provide the initial capsule opening.

The present inventors have designed a stand-alone capsule opener device for those capsules that are not pre-opened. The opener devices described herein find particular use with brewing machines that may not have a built-in opener. The opener devices may be used for various types of capsules, including but not limited to Nespresso^{®} type capsules. Any type of beverage grounds may be contained within the capsules, pods, or pre-packaged units, including but not limited to espresso, coffee, hot cocoa, mulled or hot cider, or tea.

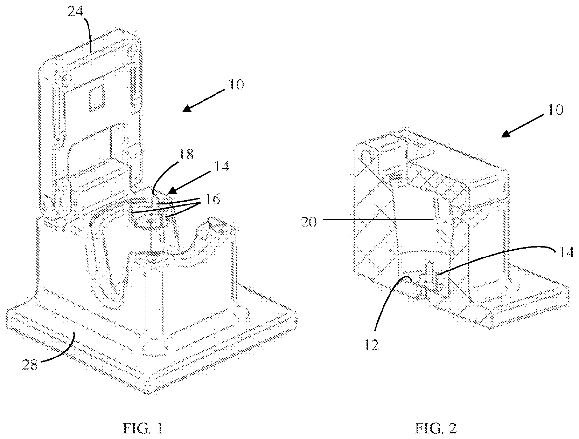

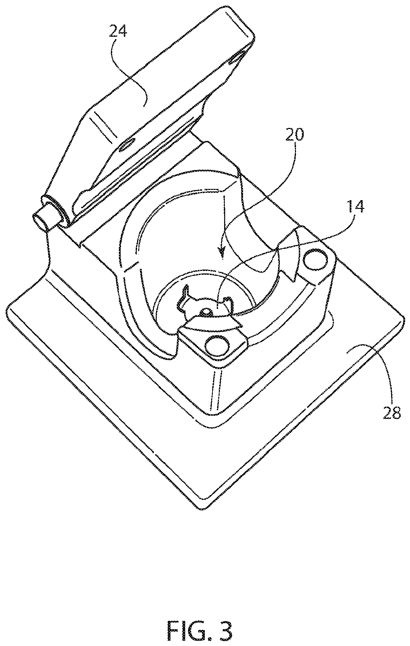

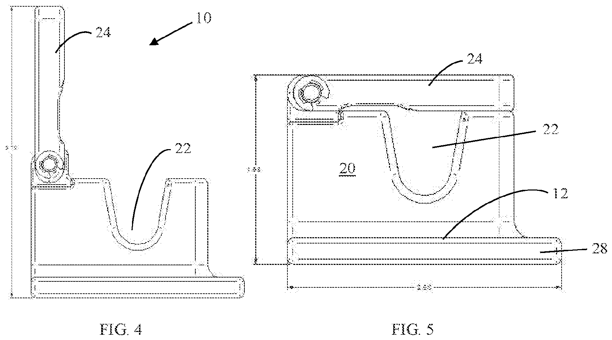

One example of an opener device 10 is illustrated by Figures 1-6. This opener device 10 is generally provided with a base 12 having a puncture feature 14. The puncture feature 14 may include one or more teeth, blades, or sharp edges. The puncture feature 14 is designed to puncture or pierce the coffee/espresso capsule, which is generally made of plastic or thin metal. Examples of potential puncture features 14 are shown in the accompanying figures, but it should be understood that alternate shapes and designs of puncture features may be used and are considered within the scope of this disclosure. For example, the puncture feature 14 may be a series of raised spikes 16. In another example, it is possible to provide a single puncture feature 14. The spike or spikes 16 may be pyramidal-shaped, cone-shaped, or any other shape. They are generally provided with a pointed tip 18 that can puncture, pierce, perforate, or otherwise create one or more openings in a sealed capsule. The general goal is for the puncture feature 14 to form one or more openings in the capsule in order to allow water to be delivered to the capsule so that water may enter the capsule at the desired temperature and pressure for optimal brewing. It has been found that locating the puncture feature 14 at the base of the well 20 can enhance safety of the device, by preventing a user from accidentally contacting the sharp puncture feature 14.

The puncture feature of blades or sharp edges may have a triangular-like shape, they may have a flat shape, they may be angled wedges, or any other appropriate shape that will puncture the capsule as desired. It is possible for all teeth to have the same shape or for variously-sized teeth to be provided on the same device. Examples of potential tooth shapes that may be used in connection with this disclosure are shown and described in U.S. Patent Nos. 6,880,454 and/or 6,854,378. The teeth may be formed as a solid protrusion. The teeth may instead have an open middle portion, if best for the capsule type. The opener features may extend straight down or be provided at an angle with respect to the first surface. Any number of opener features may also be provided.

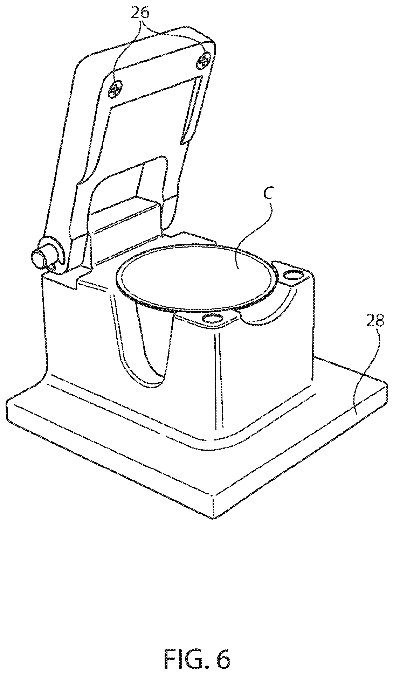

The puncture feature 14 of device 10 of FIGS 1-6 is illustrated as being located along the base 12. Device 10 is also shown as having a well 20 into which a capsule C may be positioned. The well 20 is optionally provided with finger access sides 22. The finger access sides 22 can help the user remove the capsule after use. The device 10 is also shown as having a hinged lid 24. Once the capsule C is positioned within the well 20, as illustrated by FIG. 6, the lid 24 may be closed over the capsule C in order to help press the capsule C against the puncture feature 14. Further, the lid 24 provides added protection to minimize the likelihood that a user may accidentally contact the sharp puncture feature 14.

The lid 24 may have one or more closing elements 26 associated therewith. For example, it may be desirable to prevent the lid 24 from hinging open when the device 10 is not in use. Various lid opening and closing system are possible and considered within the scope of this disclosure. In one example, the lid 24 may be provided with a magnetic closure. In another example, the lid 24 may be provided with a mechanical feature that maintains the lid in an open position without user intervention until the lid is closed to a certain degree; at that point, a mechanical closing system may take over. (This may be similar to an automatic drawer closing feature.) In another example, the lid may be snap closed. In another example, the lid 24 may close via a ball and detent closure. In another example, the lid 24 may be provided with a latching mechanism.

The device 10 can be provided on a platform 28. Device 10 may be integrally molded and formed with the platform 28, as shown in the figures. In other examples, the platform 28 may be a completely separate element to which the device is separately secured. The platform 28 may render stability to the device. The platform 28 may be fastened to a working surface, such as an aircraft galley countertop or mounted within a drawer positioned near the brewing machine. (However, it should be understood that the platform 28 is not required to be fastened to a working surface for suitable operation.)

Although the device 10 is illustrated as having a generally square or rectangular shape, it should be understood that any shape may be used and are considered within the scope of this disclosure.

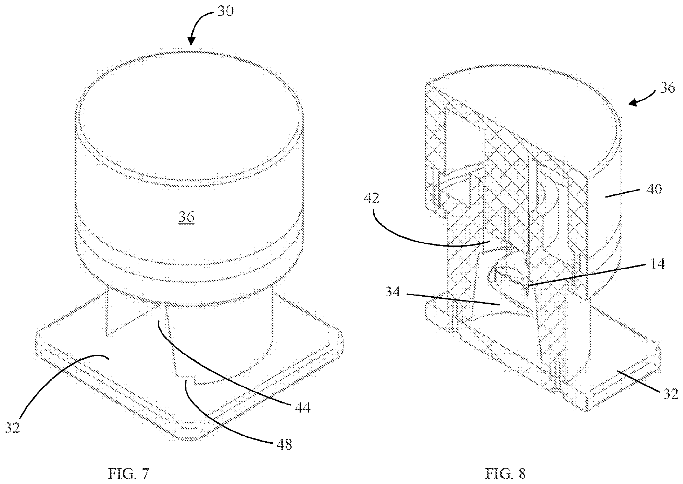

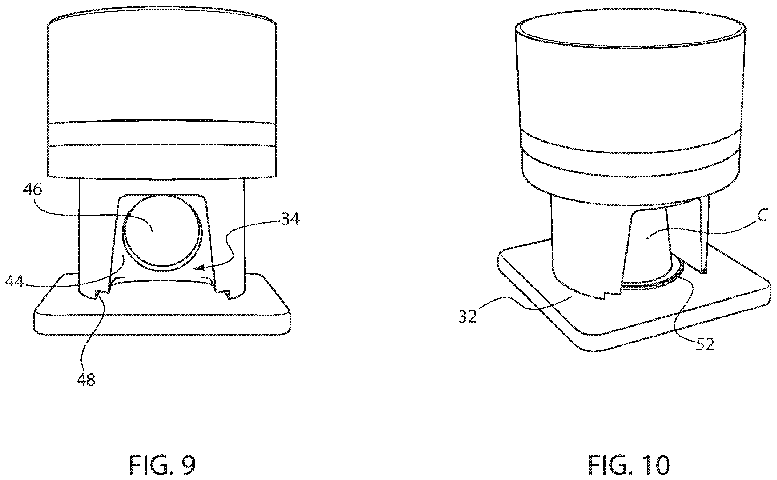

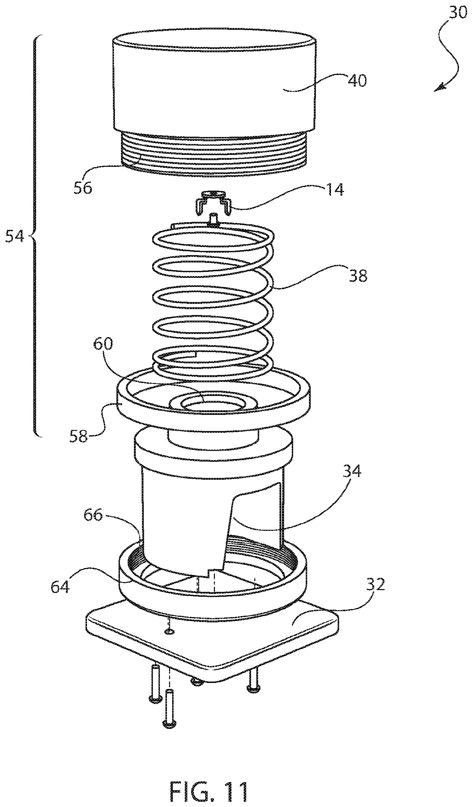

FIGS. 7-11 illustrate another embodiment of an opener device 30. This opener device functions like a chopper or a cigar-cutter. It is generally provided with a receiving base 32, a capsule containment portion 34, and a pressure receiving/application system 36. In one example, the pressure receiving/application system 36 is a spring-loaded, or similar, system. As illustrated by FIG. 11, the spring-loaded system may include a spring 38, a housing 40, and a puncture feature 14 mounted on housing 40. The housing 40 may function as the opener cover/lid, as well as provide a surface for a user to press down on in order to initiate opening action. The puncture feature 14 may optimally be mounted centrally on an interior surface 42 of the housing 40. When the housing 40 is depressed, it compresses spring 38, and the puncture feature 14 is caused to engage the capsule C. When the housing 40 is released, the rebound pressure from the compressed spring 38 causes housing 40 to return to its open position.

In one example, the spring 38 is secured within the housing 40 via a spring retainer system 54, illustrated by FIG. 11. The spring retainer system 54 may include lower threads 56 along a housing surface. The spring 38 may be compressed and secured in place via a spring plate 58. The spring plate 58 has a central opening 60 which allows access to the puncture feature 14. A spring retainer 64 may have corresponding threads 64 that cooperate with lower threads 56 of the housing 40. The spring is compressed by the spring plate 58, and the spring retainer 64 is threaded onto the lower threads 56 of the housing 40.

The capsule containment portion 34 may have a first opening 44 for receiving a capsule C. The capsule containment portion 34 may have an optional second opening 46. The second opening 46 may be used to assist removal of the capsule C. For example, a user may insert a finger through the second opening 46 to push the capsule out the first opening 44. The capsule containment portion 34 may also have capsule receiving edges 48 that are shaped as small indentations in the containment portion wall. Capsule receiving edges 48 allow flange edges 52 of a capsule C to be received so that the capsule containment portion 34 secures the capsule C securely with minimal movement. The capsule receiving edges 48 are provided only at the perimeter of the first opening 44 to further assist in properly locating the capsule C, with respect to the puncture feature 14, within the capsule containment portion 34.

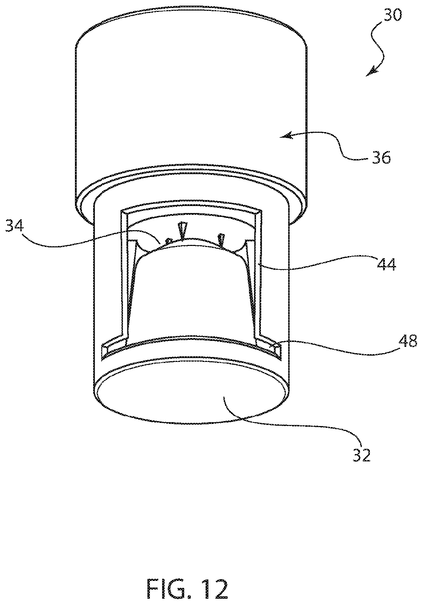

The receiving base 32 may be integrally molded and formed with the capsule containment portion 34 as a single piece, as shown in FIG. 12. In another example, the base 32 may be a completely separate element to which the portion 34 is separately secured, as shown in the figures. The base 32 may be fastened to a working surface, such as an aircraft galley countertop or mounted within a drawer positioned near the brewing machine. However, it should be understood that the base 32 is not required to be fastened to a working surface for suitable operation.

Although the device 30 is illustrated as having a generally circular upper shape and square lower shape, it should be understood that any geometrical shape options may be used and are considered within the scope of this disclosure.

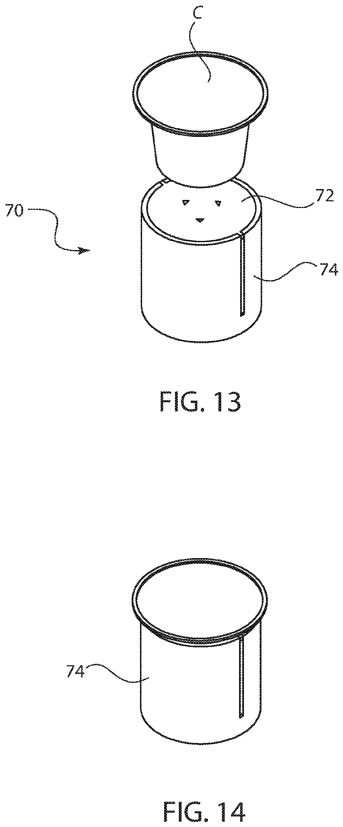

FIGS. 13-14 illustrate another embodiment of an opener device 70. This device 70 functions by inserting a capsule C against a plate 72. Depression of the plate 72 into a housing unit 74 causes creation of openings in the capsule C using one or more puncture features 42 located within the housing 74. It is possible for the plate 72 to be spring-loaded, such that pressure against the plate 72 causes it to lower into the housing unit 74. The plate 72 may also be recessed into the housing 74 at any appropriate or feasible depth permitted by the vertical dimension of the housing 74. It should be understood that any recessed depth of the plate 72 within the housing 74 may be used and is considered within the scope of this disclosure. The opener device 70 may also be provided without a plate 72 with the puncturing feature 14 (not shown) secured within the housing 74 interior. In this embodiment, pressure may be applied to the capsule C manually by the user in order to press the capsule against the puncturing feature 14.

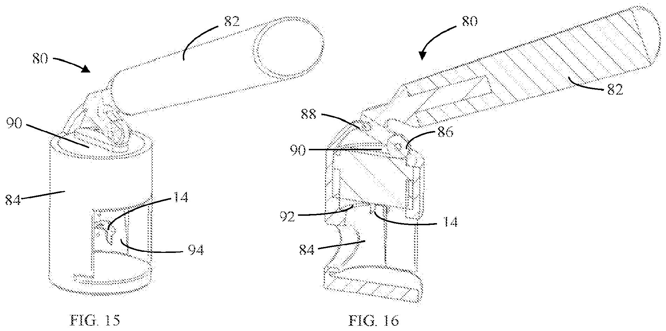

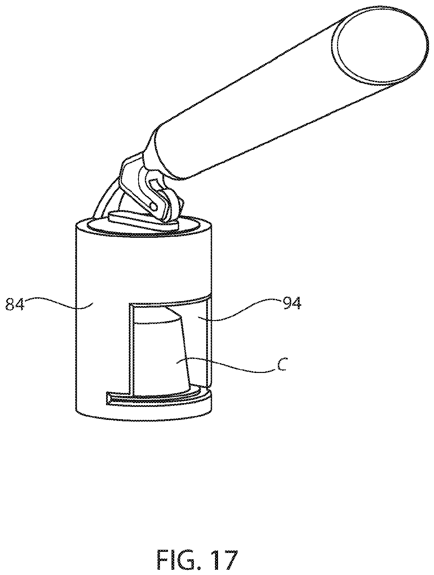

FIGS. 15-17 illustrate a further embodiment of an opener device 80. This opener device 80 may function similarly to a garlic press or a stapler. Alternatively, the device may function similarly to a hand-held bottle or can opener. This device 80 is shown having a handle 82, a capsule housing 84, and a puncture feature 14. The handle 82 may have a roller 86 and a hinged element 88. When the handle is pressed or lowered, the hinged element 88 can allow movement of the roller 86 across a pressure plate 90. The puncture feature 14 may be positioned along a lower surface 92 of the pressure plate 90. Application of pressure to the pressure plate 90 can cause its depression, and consequent downward movement of the puncture feature 14 against a capsule. FIG. 17 illustrates a capsule C positioned within a capsule containment portion 94 of the capsule housing 84.

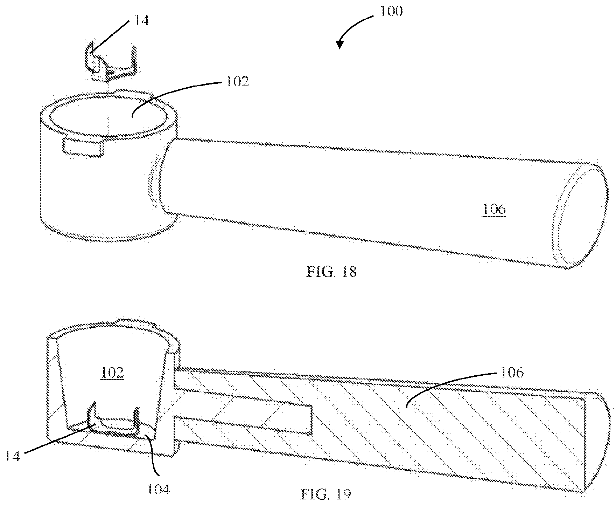

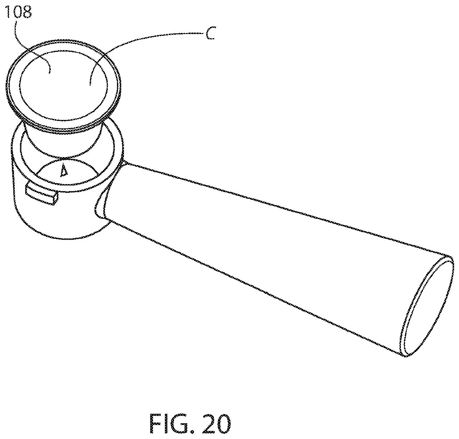

FIGS. 18-20 illustrate an alternate embodiment of an opener device 100. A capsule may be positioned within a containment portion 102 of the device. The containment portion 102 has a puncture feature 14 along at least one surface 104. When a capsule C is positioned within the containment portion 102 and pressure is applied thereto, one or more openings are formed in the capsule C. In use, once the capsule C is positioned, a user may turn the handle 106 so that a flat portion 108 of the capsule C can be pressed against a table or other work surface, forcing the other end of the capsule C against the puncture feature 14.

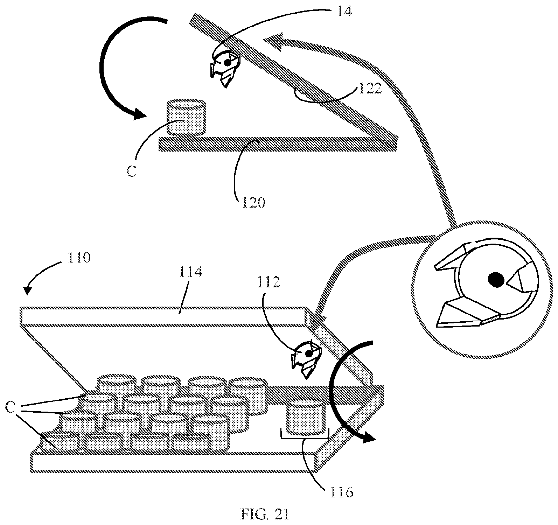

FIG. 21 illustrates these opener features schematically, showing that multiple embodiments are possible and considered within the scope of this disclosure. The general concept is that the capsule C is held in a stable position against a first surface 120, such as within a containment or receiving portion. A puncture device may be provided on a second surface 122 and is depressed thereagainst. Pressure of the puncture device against the capsule C forms one or more openings in the capsule C.

As also shown in FIG. 21, there may be provided a capsule storage box 110 that can house multiple capsules C, as well as an opener device 112. For example, the opener device 112 may be integrally formed with or otherwise nonremovable from a lid 114 of the capsule storage box 110. For example, there may be a puncture device 14 secured to the lid 114. Securement may be via one or more features, fasteners or adhesives. In another embodiment, the opener device 112 may be removable from the capsule storage box 110. This may allow an opener device with a different opener feature size or shape to be installed. The securement may be via a dove tail slot, a magnetic securement, a traditional fastener (such as a screw or nail), a quarter turn securement, or any other appropriate securement system.

The capsule storage box 110 may be designed such that opening and closing of the lid 114 causes an opener feature 112 (which may simply be a puncture device 14) that is secured to the lid to puncture a particular capsule. The storage box 110 may have a puncture location 116. The puncture location 116 may be a slight indentation or other form of receiving portion that can stabilize a capsule C during the puncture process.

Although not shown, it is possible to provide multiple opener devices 112 along the lid, such that the capsule storage box 110 can be used to open multiple capsules C at the same time. This feature may be particularly useful if a brewing machine has multiple brewing locations and multiple coffee/espresso beverages are intended to be served at once. This feature may also be useful if there are multiple brewing machines positioned within a single galley. The user may puncture multiple capsules C at once with a single lid closure such that multiple capsules C are available simultaneously for immediate use.

A "garlic press" embodiment is also possible. In use, a capsule may be placed within the press device. The user then squeezes the press device and punctures holes into the capsule at the desired size and depth, as determined by the opener features. In a "can opener" embodiment, the user may hold the capsule from the opposite end and press the capsule manually into the puncture feature to puncture the capsule. Additionally or alternatively, the opening features may be installed onto another object to create the second surface, allowing for manual use. Many such options have been described herein. Once one or more openings have been created, the user may then move the capsule from the press device and position the capsule in the brewing machine. The externally-created openings in the capsule may allow water to enter the capsule. Because the brewing machine itself need not be formed with built-in teeth or other opener features, the brewing machine may be used with other types of capsules, as desired.

It is envisioned that the devices described herein may be provided with a removable opener feature, such that a user may adjust what size opening should be formed and how many openings should be created, which may allow for variations in the brewed coffee/espresso. For example, the puncture device may be removable and replaceable. For example, the housing or capsule containment portion may be removable and replaceable. Multiple opener features may be provided with a capsule opener device, which may allow for use of different capsule types. One benefit of such a feature is that a user is not limited to the pre-installed built-in opener provided on the brewing machine. A user may be provided with freedom of choice and flexibility when using the brewing machine. It is also possible, however, for the opener feature/puncture device/housing to be integrally formed with the opener device components (e.g., such as permanently secured within the well or housing or containment portion).

The opener device may include provisions for mechanical attachment to retain the opener device in the proximity of the brewing machine and to prevent its accidental misplacement. It is possible for there to be a small convenient compartment, drawer or other housing location positioned near the brewing machine, that can accommodate the opener device for storage. It is further possible for the opener devices to be mounted or installed with respect to a working surface or along a wall near a brewing machine.

The opener devices described herein may be formed of any appropriate material, such as plastic, metal, or any other material with sufficient structural strength to hold and puncture a capsule, as necessary. If the opener device will be displayed in open view, it is possible for the handle (or other surfaces) of the device to be formed of wood, metal, marble, or other material that is visually pleasing. The opener device may be produced with various appearances to satisfy customer preference(s) and/or suit the interior design of the surroundings where they device may be employed or displayed. Logos may be printed on the opener device or a specific color combination can be printed thereon.

Changes may be made to the structures and methods recited above and shown in the drawings without departing from the scope of the following claims.

## Claims

1. A method for puncturing a beverage capsule (C) prior to its insertion into a brewing machine or an espresso machine, comprising the steps of:
a) placing the beverage capsule (C) into a stand-alone beverage capsule opener device (10, 30, 70, 80, 100, 110) located separately from the brewing machine or espresso machine, said stand-alone beverage capsule opener device (10, 30, 70, 80, 100, 110) comprising a capsule receiving portion and one or more puncture features (14, 112) and
b) puncturing one or more openings in the beverage capsule (C);
**characterized in that** the method further comprises the step of:
c) manually removing the punctured beverage capsule (C) from the stand-alone beverage capsule opener device (10, 30, 70, 80, 100, 110) for subsequent manual insertion of the punctured beverage capsule (C) into the brewing machine or espresso machine.

2. The method of claim 1, wherein the beverage capsule (C) is placed within a well (20) comprising along a base of the well the one or more puncture features (14) of the stand-alone beverage capsule opener device (10) and wherein the punctured beverage capsule is removed from the stand-alone beverage capsule opener device by way of finger access sides (22) of the well (20).

## Patentansprüche

1. Verfahren zum Durchstechen einer Getränkekapsel (C) vor ihrem Einfügen in eine Brühmaschine oder eine Espressomaschine, umfassend die Schritte:
a) Platzieren der Getränkekapsel (C) in einer eigenständigen Getränkekapselöffnungsvorrichtung (10, 30, 70, 80, 100, 110), die getrennt von der Brühmaschine oder Espressomaschine angeordnet ist, wobei die eigenständige Getränkekapselöffnungsvorrichtung (10, 30, 70, 80, 100, 110) einen Kapselaufnahmeabschnitt und ein oder mehrere Durchstechelemente (14, 112) umfasst, und
b) Stechen einer oder mehrerer Öffnungen in die Getränkekapsel (C);
**dadurch gekennzeichnet, dass** das Verfahren weiter den Schritt umfasst:
c) manuelles Entfernen der durchstochenen Getränkekapsel (C) aus der eigenständigen Getränkekapselöffnungsvorrichtung (10, 30, 70, 80, 100, 110) zum anschließenden manuellen Einfügen der durchstochenen Getränkekapsel (C) in die Brühmaschine oder Espressomaschine.

2. Verfahren nach Anspruch 1, wobei die Getränkekapsel (C) in einer Vertiefung (20) platziert wird, die entlang einer Basis der Vertiefung das eine oder die mehreren Durchstechelemente (14) der eigenständigen Getränkekapselöffnungsvorrichtung (10) umfasst, und wobei die durchstochene Getränkekapsel aus der eigenständigen Getränkekapselöffnungsvorrichtung über Fingerzugriffsseiten (22) der Vertiefung (20) entfernt wird.

## Revendications

1. Méthode de perforation d'une capsule de boisson (C) avant son insertion dans une machine de brassage ou une machine à expresso, comprenant les étapes suivantes consistant à :
a) placer la capsule de boisson (C) dans un dispositif autonome d'ouverture de capsule de boisson (10, 30, 70, 80, 100, 110) situé séparément de la machine de brassage ou de la machine à espresso, ledit dispositif autonome d'ouverture de capsule de boisson (10, 30, 70, 80, 100, 110) comprenant une partie de réception de capsule et un ou plusieurs éléments de perforation (14, 112) et
b) perforer une ou plusieurs ouvertures dans la capsule de boisson (C) ;
**caractérisé en ce que** la méthode comprend en outre l'étape consistant à :
c) retirer manuellement la capsule de boisson perforée (C) du dispositif autonome d'ouverture de capsules de boisson (10, 30, 70, 80, 100, 110) en vue de l'insertion manuelle ultérieure de la capsule de boisson perforée (C) dans la machine de brassage ou la machine à expresso.

2. Méthode de la revendication 1, dans laquelle la capsule de boisson (C) est placée dans un puits (20) comprenant le long d'une base du puits ledit un ou plusieurs éléments de perforation (14) du dispositif autonome d'ouverture de capsule de boisson (10) et dans lequel la capsule de boisson perforée est retirée du dispositif autonome d'ouverture de capsule de boisson par des côtés d'accès de doigts (22) du puits (20).
